# EUROPEAN PATENT SPECIFICATION

(11) **EP 3 974 076 B1**
(45) Date of publication and mention of the grant of the patent: **08.03.2023**
(21) Application number: 21166602.9
(22) Date of filing: 01.04.2021
(51) Int. Cl.: B21C 37/29, B21H 3/02, B23K 26/00, B23K 26/282, B23K 26/30, B23K 26/38, B23K 28/02, B21K 21/12, B21D 26/033, B21D 26/037, B21D 41/04, B23P 15/00, F16L 41/00

(54) **STAINLESS-STEEL TEE-PIPE MOULDING PROCESS**
VERFAHREN ZUM FORMEN VON EDELSTAHL-T-ROHREN
PROCÉDÉ DE FORMAGE DE TUYAU EN T EN ACIER INOXYDABLE

(30) Priority: 23.09.2020 CN 202011008146
(43) Date of publication of application: 30.03.2022
(73) Proprietor: Zhejiang Delifu Technology Co., Ltd, Ningbo, Zhejiang 315181 (CN)
(72) Inventor: WANG, Guofei, Ningbo, 315181 (CN)
(74) Representative: Spengler, Robert

(56) References cited:
- DE-U1- 20 009 721
- GB-A- 1 153 797
- GB-A- 1 449 912
- KR-B1- 101 772 966
- US-A- 2 387 154
- US-A- 2 425 645

## Description

### Technical Field

The present invention relates to the technical field of pipeline preparation and moulding, in particular to a stainless-steel tee-pipe moulding process.

### Background

A multi-way pipe like a tee-pipe, as the most important accessory in pipeline construction, is mainly used at the key branch of a main pipeline. The widely used tee-pipe is generally moulded by carrying out hammer forging on a pipe blank and then carrying out die forging. However, such processing has the defects of large blanking weight, high cost, and the quality of the blank subjected to hammer forging and the forged surface is inferior. Besides, the existing copper tee-pipe is easy to corrode when used in connection with a water pipe, and easily causes water source pollution.

Document KR 101 772 966 B1 shows a process for manufacturing a tee-pipe, wherein the two ports of a pipe are subjected to a necking treatment and the pipe body itself is subjected to liquid pressure to form the branched arm of the tee-pipe. The ends of the three arms are then threaded.

### Summary

It is an object of the present disclosure to overcome the shortcomings of the prior arts by providing a stainless-steel tee-pipe moulding process to thereby avoid the problems of easy corrosion of conventional copper tee-pipes and related water source pollution, large blanking weight and high cost.

This problem is solved by a stainless-steel tee-pipe moulding process as claimed by claim 1. Further advantageous embodiments are the subject-matter of the dependent claims.

As compared to the prior art, the stainless-steel tee-pipe moulding process provided according to the present invention has the following beneficial effects: the stainless-steel tee-pipe produced according to the present invention is suited to replace the existing tee-pipes made of copper, such that when it is used to connect with a water pipe, harmful corrosion and pollution to drinkable water are reduced, and corrosion to the tee-pipe and pollution to a water source are avoided. In addition, a stainless-steel tee-pipe produced according to the present invention features a high bearing water pressure and long service life. Further, the stainless-steel tee-pipe moulding process according to the present invention can replace the conventional integrated forging moulding process, to thereby save more material and lowering the production costs.

### Brief Description of the Drawings

FIG. 1 is a flow diagram of Embodiment 1 of the present invention.
FIG. 2 is a flow diagram of Embodiment 2 of the present invention.

### Embodiments

A clear and complete description about the technical solutions of the embodiments of the present invention will be given in conjunction with the appended drawings.

### Embodiment One

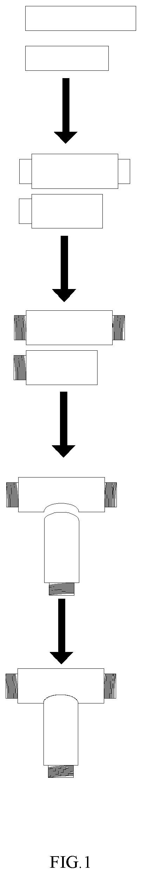

Referring to FIG.1, the present invention provides a technical solution, i.e., a stainless-steel tee-pipe moulding process. In this embodiment, a stainless-steel pipe is used to prepare a 4.64cm tee-pipe through the following specific steps:
step S1: successively cutting out a 140cm-long main pipe and a 60cm-long secondary pipe from a stainless-steel pipe of which the calibre is 3.8cm, with two ports of the main pipe and one port of the secondary pipe serving as connecting ports;
step S2: carrying out a water swelling treatment on the bodies of the main and secondary pipes via a swelling apparatus comprising a water swelling apparatus and an internal high-pressure apparatus. To be specific, water swelling dies corresponding to the main and secondary pipes in the primary swelling treatment are selected first, and then the main pipe and secondary pipe are placed in the water swelling dies respectively. In the treatment process, the two ports of the main pipe keep unchanged under the effect of the water swelling die, while its body is subjected to bidirectional water swelling and moulding from the two ports of the main pipe by virtue of a swelling apparatus, or one port of the main pipe is subjected to unidirectional water swelling and moulding. Similarly, the two ports of the secondary pipe keep unchanged under the effect of the water swelling die, while its body is subjected to bidirectional water swelling and moulding from the two ports of the secondary pipe by virtue of a swelling apparatus, or one port of the secondary pipe is subjected to unidirectional water swelling and moulding.

Afterwards, water swelling dies corresponding to the main and secondary pipes in the secondary swelling treatment are selected, and then the above steps are repeated for carrying out a secondary water swelling treatment so as to obtain the main pipe with the internal pipe diameter being 4.64cm and the secondary pipe with the internal pipe diameter of 4.19cm, but the calibre of the two ports of the main pipe and one port of the secondary pipe is all kept at 3.8cm.

step S3: integrally rolling the outer walls of the connecting ports of the main pipe and secondary pipe via a roll press to form rolled threads. Particularly, the 1.8cm rolled threads are formed under the pressure of 200KN-240KN, with its thread pitch being 0.4cm, thread height being 0.1cm and nominal diameter being 4cm.

step S4: forming a 4.19cm welding opening on the body of the main pipe after the treatment in step S3 through laser cutting, meantime laser cutting the other port of the secondary pipe to form a locking port matched with the welding opening, and splicing and laser welding the welding opening of the main pipe with the locking port of the secondary pipe via a laser welding torch to form a tee-pipe blank; and

step S5: performing surface polishing and electroplating treatment on the tee-pipe blank obtained in step S4 so as to obtain a tee-pipe end product.

### Embodiment Two

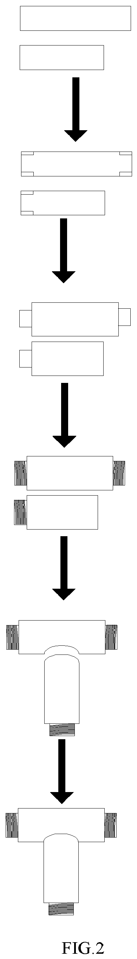

As shown in FIG. 2, this embodiment differs from Embodiment One in that: in step S2 of this embodiment, an oil press is used as a necking apparatus to carry out necking treatment on the two ports of the main pipe and one port of the secondary pipe. To be specific, the oil press and a necking die are used to carry out necking treatment on the two ports of the main pipe and one port of the secondary pipe for at least twice, the primary necking ratio is 10%-15%, the secondary necking ratio is 5%-8%, and finally, the original calibre of the main pipe is reduced to 3.8cm from 4.8cm, and the original calibre of the secondary pipe is reduced to 3.5cm from 4.3cm; and a 4.8cm welding opening is formed on the body of the main pipe in step S4 so as to be laser welded with the secondary pipe.

Although the present invention has been explained in detail with reference to the above embodiments, it should be understood by those skilled in the art that, modifications to the technical solutions of the embodiments or even equivalent substitutions for partial technical features therein are allowed, without departing from the scope of the appended claims.

## Claims

1. A stainless-steel tee-pipe moulding process, comprising the following steps:
S1: taking a stainless-steel pipe as a processing raw material and cutting out a main pipe and a secondary pipe from said stainless-steel pipe;
S2: carrying out water swelling treatment on the bodies of the main pipe and secondary pipe with a swelling apparatus; or necking two ports of the main pipe and one port of the secondary pipe with a necking apparatus;
S3: carrying out thread treatment on the two ports of the main pipe and on one port of the secondary pipe with a thread forming apparatus to form connecting threads;
S4: forming a T-branch port on the body of the main pipe obtained after treatment in step S3, meanwhile, cutting the other port of the secondary pipe to obtain a docking port matched with the T-branch port, and then welding the docking port of the secondary pipe with the T-branch port of the body of the main pipe to form a tee-pipe blank; and
S5: carrying out surface electroplating on the tee-pipe blank obtained after treatment in step S4 to form a tee-pipe end product.

2. The stainless-steel tee-pipe moulding process of claim 1, wherein after carrying out water swelling treatment on the bodies of the main and secondary pipes in step S2, two ports of the main pipe and one port of the secondary pipe are necked using a necking apparatus.

3. The stainless-steel tee-pipe moulding process of claim 1, wherein the water swelling treatment in step S2 comprises the following step of carrying out said water swelling treatment on the bodies of the main pipe and secondary pipes via a water swelling die according to pre-set swelling requirements; wherein, during the process, the two ports of the main pipe keep unchanged under the effect of the water swelling die, while the body of the main pipe is subjected to bidirectional water swelling and moulding from the two ports of the main pipe by virtue of a water swelling apparatus, or one port of the main pipe is subjected to unidirectional water swelling and moulding, and the two ports of the secondary pipe keep unchanged under the effect of the water swelling die, while the body of the secondary pipe is subjected to bidirectional water swelling and moulding from the two ports of the secondary pipe by virtue of a water swelling apparatus, or one port of the secondary pipe is subjected to unidirectional water swelling and moulding.

4. The stainless-steel tee-pipe moulding process of claim 1, wherein the connecting threads formed in step S3 are prepared into rolled threads via roll teeth.

5. The stainless-steel tee-pipe moulding process of claim 1, wherein the connecting threads formed in step S3 are prepared into sizing threads via a sizing mill and a sizing die.

## Patentansprüche

1. Verfahren zum Formen von Edelstahl-T-Rohren, umfassend die folgenden Schritte:
S1: Verwenden eines Edelstahlrohrs als Verarbeitungsrohmaterial und Ausschneiden eines Hauptrohrs und eines sekundären Rohrs aus dem Edelstahlrohr;
S2: Durchführen einer Wasserquellungsbehandlung auf den Körpern des Hauptrohrs und des sekundären Rohrs mit einer Quellungsvorrichtung oder Einschnüren von zwei Anschlüssen des Hauptrohrs und eines Anschlusses des sekundären Rohrs mit einer Einschnürvorrichtung;
S3: Durchführen einer Gewindebehandlung auf den zwei Anschlüssen des Hauptrohrs und auf einem Anschluss des sekundären Rohrs mit einer Gewindeerzeugungsvorrichtung, um Anschlussgewinde zu bilden;
S4: Bilden eines T-Abgangs-Anschlusses auf dem Körper des Hauptrohrs, erhalten nach der Behandlung in Schritt S3, unterdessen Schneiden des anderen Anschlusses des sekundären Rohrs, um einen Docking-Anschluss zu erhalten, der mit dem T-Abgangs-Anschluss abgestimmt ist, und dann Schweißen des Docking-Anschlusses des sekundären Rohrs mit dem T-Abgangs-Anschluss des Körpers des Hauptrohrs, um einen T-Rohr-Rohling zu bilden; und
S5: Durchführen einer Oberflächen-Elektroplattierung auf dem T-Rohr-Rohling, erhalten nach der Behandlung in Schritt S4, um ein T-Rohr-Endprodukt zu bilden.

2. Verfahren zum Formen von Edelstahl-T-Rohren nach Anspruch 1, wobei nach dem Durchführen der Wasserquellungsbehandlung auf den Körpern des Hauptrohrs und des sekundären Rohrs in Schritt S2 zwei Anschlüsse des Hauptrohrs und ein Anschluss des sekundären Rohrs unter Verwendung einer Einschnürvorrichtung eingeschnürt werden.

3. Verfahren zum Formen von Edelstahl-T-Rohren nach Anspruch 1, wobei die Wasserquellungsbehandlung in Schritt S2 den folgenden Schritt des Durchführens der Wasserquellungsbehandlung auf den Körpern des Hauptrohrs und des sekundären Rohrs über eine Wasserquellungsgussform gemäß voreingestellten Schwellungsanforderungen umfasst; wobei während des Verfahrens die zwei Anschlüsse des Hauptrohrs unter der Einwirkung der Wasserquellungsgussform unverändert bleiben, während der Körper des Hauptrohrs einer bidirektionalen Wasserquellung und Formung von den zwei Anschlüssen des Hauptrohrs dank einer Wasserquellungsvorrichtung unterzogen werden, oder ein Anschluss des Hauptrohrs einer unidirektionalen Wasserquellung und Formung unterzogen wird und die zwei Anschlüsse des sekundären Rohrs unter der Einwirkung der Wasserquellungsgussform unverändert bleiben, während der Körper des sekundären Rohrs einer bidirektionalen Wasserquellung und Formung von den zwei Anschlüssen des sekundären Rohrs dank einer Wasserquellungsvorrichtung unterzogen wird oder ein Anschluss des sekundären Rohrs einer unidirektionalen Wasserquellung und Formung unterzogen wird.

4. Verfahren zum Formen von Edelstahl-T-Rohren nach Anspruch 1, wobei die Anschlussgewinde, gebildet in Schritt S3, mit Hilfe von Walzenzähnen zu gerollten Gewinden vorbereitet werden.

5. Verfahren zum Formen von Edelstahl-T-Rohren nach Anspruch 1, wobei die Anschlussgewinde, gebildet in Schritt S3, über ein Maßwalzwerk und eine Maßgussform zu Maßgewinden vorbereitet werden.

## Revendications

1. Procédé de moulage de tuyau en T en acier inoxydable, comprenant les étapes suivantes consistant à :
S1 : prendre un tuyau en acier inoxydable en tant que matière première de traitement et couper un tuyau principal et un tuyau secondaire dans ledit tuyau en acier inoxydable ;
S2 : réaliser un traitement de gonflement à l'eau sur les corps du tuyau principal et du tuyau secondaire avec un appareil de gonflement ; ou forer circulairement deux orifices du tuyau principal et un orifice du tuyau secondaire avec un appareil de forage circulaire ;
S3 : réaliser un traitement de filetage sur les deux orifices du tuyau principal et sur un orifice du tuyau secondaire avec un appareil de formage de filetage pour former des filetages de raccordement ;
S4 : former un orifice de branchement en T sur le corps du tuyau principal obtenu après le traitement à l'étape S3, pendant ce temps, couper l'autre orifice du tuyau secondaire pour obtenir un orifice d'accueil correspondant à l'orifice de branchement en T, et ensuite souder l'orifice d'accueil du tuyau secondaire avec l'orifice de branchement en T du corps du tuyau principal afin de former une ébauche de tuyau en T ; et
S5 : réaliser une galvanoplastie de surface sur l'ébauche de tuyau en T obtenue après le traitement à l'étape S4 afin de former un produit final de tuyau en T.

2. Procédé de moulage de tuyau en T en acier inoxydable selon la revendication 1, dans lequel après avoir réalisé le traitement de gonflement à l'eau sur les corps des tuyaux principal et secondaire à l'étape S2, deux orifices du tuyau principal et un orifice du tuyau secondaire sont forés circulairement à l'aide d'un appareil de forage circulaire.

3. Procédé de moulage de tuyau en T en acier inoxydable selon la revendication 1, dans lequel le traitement de gonflement à l'eau à l'étape S2 comprend l'étape suivante consistant à réaliser ledit traitement de gonflement à l'eau sur les corps du tuyau principal et des tuyaux secondaires via un moule de gonflement à l'eau selon des exigences de gonflement préétablies ; dans lequel pendant le procédé, les deux orifices du tuyau principal restent inchangés sous l'effet du moule de gonflement à l'eau, alors que le corps du tuyau principal est soumis au gonflement à l'eau bidirectionnel et au moulage des deux orifices du tuyau principal en vertu d'un appareil de gonflement à l'eau ou un orifice du tuyau principal est soumis au gonflement à l'eau unidirectionnel et au moulage et les deux orifices du tuyau secondaire restent inchangés sous l'effet du moule de gonflement à l'eau, alors que le corps du tuyau secondaire est soumis au gonflement à l'eau bidirectionnel et au moulage des deux orifices du tuyau secondaire en vertu de l'appareil de gonflement à l'eau ou un orifice du tuyau secondaire est soumis au gonflement à l'eau unidirectionnel et au moulage.

4. Procédé de moulage de tuyau en T en acier inoxydable selon la revendication 1, dans lequel les filetages de raccordement formés à l'étape S3 sont préparés en filets roulés via des dents de rouleau.

5. Procédé de moulage de tuyau en T en acier inoxydable selon la revendication 1, dans lequel les filetages de raccordement formés à l'étape S3 sont préparés en filets calibrés via un laminoir calibreur et une matrice de calibrage.
